# EUROPEAN PATENT SPECIFICATION

(11) **EP 3 858 767 B1**
(45) Date of publication and mention of the grant of the patent: **21.06.2023**
(21) Application number: 19856229.0
(22) Date of filing: 29.08.2019
(51) Int. Cl.: B65G 47/88

(54) **CONVEYING SYSTEM AND STOPPER FOR CONVEYING SYSTEM**
ÜBERTRAGUNGSSYSTEM UND STOPPER FÜR ÜBERTRAGUNGSSYSTEM
SYSTÈME DE TRANSMISSION ET ARRÊT POUR SYSTÈME DE TRANSMISSION

(30) Priority: 31.08.2018 CN 201821431594 U
(43) Date of publication of application: 04.08.2021
(73) Proprietor: Bosch Rexroth (Xi'an) Electric Drives and Controls Co., Ltd., Xi'An, Shanxi 710021 (CN)
(72) Inventor: GUENER, Till, Changzhou, Jiangsu 213164 (CN); GAO, Lindi, Changzhou, Jiangsu 213164 (CN); LUDWIG, Peter, Changzhou, Jiangsu 213164 (CN); ZHANG, Shuying, Changzhou, Jiangsu 213164 (CN); CHEN, Lei, Changzhou, Jiangsu 213164 (CN); YANG, Shenghui, Changzhou, Jiangsu 213164 (CN); ZHENG, Wenjie, Changzhou, Jiangsu 213164 (CN)
(74) Representative: Isarpatent
(86) International application number: PCT/CN2019/103261
(87) International publication number: WO 2020/043158

(56) References cited:
- WO-A1-95/01853
- CN-A- 1 951 630
- DE-A1- 3 806 436
- DE-A1- 3 828 310
- DE-A1- 10 216 801
- DE-A1-102007 024 300
- DE-A1-102010 056 036
- DE-U1- 29 714 288
- DE-U1-202012 002 094
- US-A- 5 199 537

## Description

### Technical field

The present invention relates to the technical field of automatic processing and conveying, in particular to a conveying system and a stopping device for the conveying system.

### Background of the invention

In the technical field of automatic processing and conveying, conveying systems for conveying workpieces play an irreplaceable role. In industrial production and assembly processes, conveying systems are generally used for operations. In a conveying system, a tray carrying a workpiece advances along a track of the conveying system. When the tray moves to a particular processing or assembly position, a stopping means must be used to make the workpiece stop at that place in order to perform an operation. However, the stopping travel of a conventional stopping means can only be adjusted to a limited extent, and the conventional stopping means is structurally complex and highly priced, causing the cost of the conveying system as a whole to increase.

Thus, there is a need for an improved conveying system and stopping means thereof to overcome the problems in the prior art.

Document DE 102 16 801 A1 discloses a stopping element comprising a damping cylinder that includes a damping piston, and a stopper cylinder configured to move the damping cylinder, wherein a first valve is provided and configured to apply the stopper cylinder with a fluid, and a second valve is provided and configured to apply the damping cylinder with a fluid.

### Summary of the invention

In view of the abovementioned problems in the prior art, the present invention aims to provide an improved conveying system and a stopping device thereof, which is capable of stopping, in a damped fashion, a moving tray at a designated position in the conveying system. The stopping device according to the present invnetion, and thus the conveying system, are structurally simple, and have advantages such as high operating efficiency, stepless adjustment and buffering, and safe and accurate operation.

To this end, the invention provides a stopping device in accordance with claim 1 and a conveying system in accordance with claim 13.

According to one aspect of the present invention, a stopping device for a conveying system is provided, characterized in that the stopping device comprises: a base; and a first piston assembly, fitted in the base, the first piston assembly comprising: a tube part, the tube part comprising a shock absorbing cavity, the shock absorbing cavity containing a pressure medium; and a first core part disposed in the tube part, the first core part having a first movement direction relative to the base, and the first core part comprising a stopping part and a rod part capable of reciprocating in the first movement direction in the shock absorbing cavity, the stopping part being located at a free end of the rod part, wherein the first piston assembly, relative to the base, has a second movement direction perpendicular to the first movement direction.

According to a feasible embodiment, opening parts are provided on two opposite side faces of the tube part respectively, and protruding parts adapted to the opening parts are provided on two opposite side faces of the first core part respectively.

According to a feasible embodiment, the opening part on each side face of the tube part comprises a wide opening part remote from the stopping part and a narrow opening part close to the stopping part; the protruding part on each side face of the first core part comprises a wide protruding part remote from the stopping part and a narrow protruding part close to the stopping part; and the wide opening part is adapted to the wide protruding part, and the narrow opening part is adapted to the narrow protruding part.

According to a feasible embodiment, the first core part, in the first movement direction, has a first stopping position when initial contact is made with a tray moving in the conveying system, and a second stopping position reached by movement in a damped fashion in the shock absorbing cavity while staying in close contact with an inner wall of the tube part under the pushing action of the tray; and in the first stopping position, the wide protruding part of the first core part pushes against the narrow opening part of the tube part.

According to the invention, the stopping device further comprises: a second piston assembly, which is fitted in the base and coupled to the first piston assembly; and the second piston assembly is configured to move in the second movement direction so as to drive the first piston assembly to move in the second movement direction, so that the first core part has a lowered position in which it has moved out of a movement path of the tray of the conveying system by moving downward in the second direction, and an elevated position in which it has returned to the movement path of the tray by moving upward in the second direction.

According to a feasible embodiment, the second piston assembly of the stopping device comprises: a second core part, coupled to the tube part of the first piston assembly; a screw, extending into a first cavity of the second core part and being configured to fix the second core part; and a travel assistance member, coupled to the second core part, the travel assistance member being configured to cause the first core part to return to the elevated position located in the movement path of the tray of the conveying system by applying a force to the second core part so that the second piston assembly drives the first piston assembly upward.

According to a feasible embodiment, the tube part of the first piston assembly further comprises a hollow rod part extending parallel to the second movement direction, the hollow rod part having a slot, and the base has a groove which accommodates the hollow rod part and in which the hollow rod part can move; and the second core part has a connection part adapted to the slot.

According to the invention, the second piston assembly of the stopping device comprises a second cavity, and the base is provided with a duct, which is in fluid connection with both the shock absorbing cavity and the second cavity.

According to a feasible embodiment, the first piston assembly further comprises an adjustment member passing through the duct of the base and the tube part, the adjustment member being configured to move in the duct, so as to narrow or widen the connection between the duct and the shock absorbing cavity, such that damping of movement of the first core part in the shock absorbing cavity has different magnitudes.

According to a feasible embodiment, the travel assistance member of the second piston assembly of the stopping device comprises at least one spring element.

According to the invention, the pressure medium is a gaseous pressure medium;

According to another embodiment, the first core part is L-shaped, and formed by molding from plastic or aluminium.

Another aspect of the present application provides a conveying system, comprising: a conveying track; and a tray, adapted to the conveying track and capable of moving along the conveying track, the tray being used for loading a workpiece being subjected to an operation in the conveying system; wherein the conveying system further comprises the stopping device for the conveying system as described above, the stopping device being attached to the conveying track.

According to a feasible embodiment, the conveying system further comprises a control valve configured to control the times at which the pressure medium is supplied to the stopping device and the supply of the pressure medium is stopped.

According to the technical solution of the present application, a single-piece tube part and a single-piece first core part are used to realize the first piston assembly, thereby reducing the number of members; the structure is simple and flexible, accuracy is high and safety is good, thereby optimizing the stopping device and the conveying system having the optimized stopping device.

### Brief description of the drawings

A more thorough understanding of and familiarity with the above and other aspects of the present invention will be gained through the following particular embodiments in conjunction with the drawings, in which:
Fig. 1 is a schematic diagram of the conveying system according to a feasible embodiment of the present invention;
Fig. 2 is a structural schematic diagram of the stopping device of the conveying device in Fig. 1;
Figs. 3A - 3E are schematic diagrams of the stopping process of the stopping device according to a feasible embodiment of the present invention, wherein Figs. 3A - 3E are schematic diagrams of five states in the entire stopping process respectively; and
Fig. 4 is a three-dimensional schematic diagram of a partial structure of the stopping device according to a feasible embodiment of the present invention.

### Detailed description of the invention

Some embodiments of the present invention are now described with reference to the drawings.

The present invention relates generally to a conveying system for conveying a workpiece, the conveying system having a stopping device. In the conveying system, the workpiece is loaded on a tray that is capable of advancing on a track of the conveying system, and the stopping device is capable of stopping, in a damped fashion, the tray that is advancing in the conveying system. The conveying system according to the present invention has flexible planning, has a simple structure, and is convenient and quick to operate.

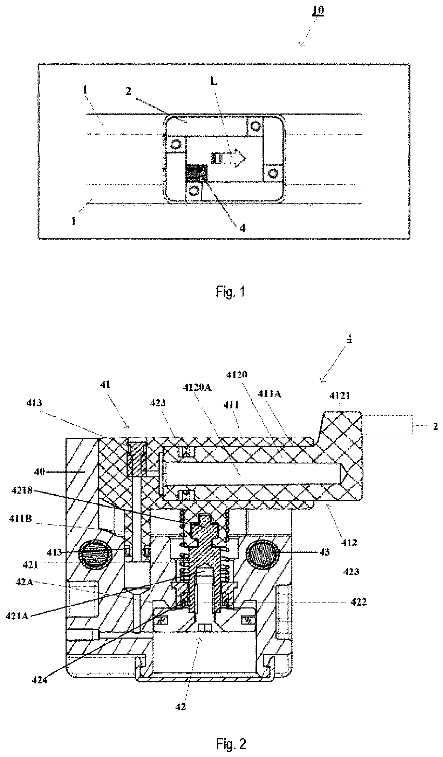

Fig. 1 shows schematically a conveying system 10 according to a feasible embodiment of the present invention, comprising a conveying track 1, a tray 2 and a stopping device 4. Fig. 2 shows schematically a structural schematic diagram of the stopping device 4 of the conveying system 10 in Fig. 1.

Firstly, the conveying system according to an embodiment of the present invention is explained with reference to Figs. 1 and 2.

The conveying system 10 may comprise one or more trays 2. The tray 2 is configured to carry a workpiece, and advances along the track 1 under the driving action of the track 1 of the conveying system 10, e.g. advances in a direction L (the direction of the arrow in Fig. 1). The stopping device 4 is fixed on the track 1, e.g. fixed on the track 1 by a bolt passing through a hole 43 of the stopping device 4. It should be understood that the fixing position of the stopping device 4 on the track 1 can be set as required. In other words, the stopping device 4 can be arranged flexibly at an attachment position on the track 1.

The stopping device 4 is initially disposed in a movement path of the tray 2 and configured to stop, in a damped fashion, the tray 2 that is advancing in direction L, in order to subject the workpiece loaded on the tray 2 to an operation such as processing. When the operation on the workpiece has ended, the stopping device 4 moves out of the movement path of the tray 2 in order to release the tray 2; and once the tray 2 has left, the stopping device 4 returns to an initial position, i.e. goes back into the movement path of the tray 2, to await the next stopping.

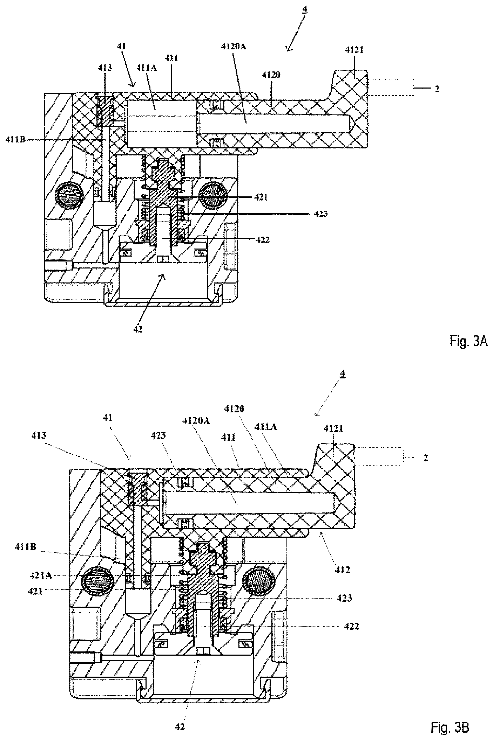

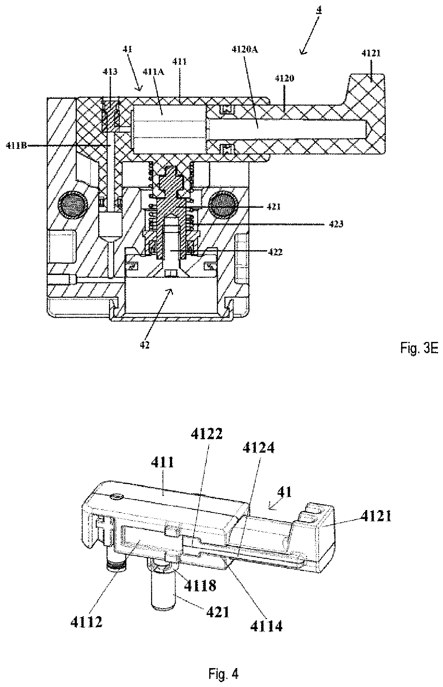

Figs. 3A - 3E show 5 states in a stopping process of the stopping device 4 according to a feasible embodiment of the present invention. Fig. 4 shows a partial structure of the stopping device 4 according to a feasible embodiment of the present invention. Various components of the stopping device 4 and the stopping principles thereof are explained in detail below in conjunction with the drawings.

The stopping device 4 comprises a base 40, and a first piston assembly 41 and a second piston assembly 42 that are located within the base 40. The first piston assembly 41 is coupled to the second piston assembly 42. The first piston assembly 41 is configured to stop the tray 2 in a horizontal direction (a first movement direction) in a damped, shock-absorbing fashion. The second piston assembly 42 is located below the first piston assembly 41, and configured to drive the first piston assembly 41 to move in a vertical direction (a second movement direction), in order to move out of and return to the movement path of the tray 2.

The first piston assembly 41 has a tube part 411 and a first core part 412. The tube part 411 comprises a shock absorbing cavity 411A. In some embodiments, the tube part 411 is a single molded member. The shock absorbing cavity 411A has a pressure medium, e.g. a gaseous pressure medium such as compressed air. The first core part 412 comprises a rod part 4120 and a vertical stopping part 4121. The stopping part 4121 is located at a free end of the rod part 4120. In some embodiments, the first core part 412 is an L-shaped single molded member. The first core part 412 has a first movement direction relative to the base 40, e.g. a horizontal direction. The rod part 4120 reciprocates in the first movement direction in the shock absorbing cavity 411A. In some embodiments, the rod part 4120 moves in the shock absorbing cavity 411A while staying in close contact with an inner wall of the tube part 411. Relative to the base 40, the first piston assembly 41 has a second movement direction, e.g. a vertical direction, that is perpendicular to the first movement direction.

In some embodiments, the rod part 4120 has a cavity 4120A in fluid communication with the shock absorbing cavity 411A, in order to make the rod part 4120 lightweight.

Initially, the first core part 412 is located in the shock absorbing cavity 411A at a position of maximum extension, e.g. a first stopping position as shown in Fig. 3A. When the stopping part 4121 comes into contact with the moving tray 2, the first core part 421 moves in the shock absorbing cavity 411A as the tray 2 comes into contact with the stopping part 4121 and gradually slows to a stop. That is to say, the first core part 412 stops the tray 2 in a damped fashion, e.g. the first core part 412 moves from the first stopping position when contact with the tray 2 was just made, to a second stopping position when the tray 2 stops. That is to say, the first stopping position is an initial position where the tray 2 just makes contact with the stopping part 4121, and the second stopping position is a final position where the tray 2 stops, i.e. a position of maximum insertion of the first core part 412 in the shock absorbing cavity 411A, as shown in Fig. 3B.

As can be seen from the description above, according to an embodiment of the present invention, the first core part 412 of the stopping device 4 is an integrally formed member, e.g. formed by casting, and is itself structurally simple, with low processing costs. The stopping device 4 stops the moving tray 2 in a damped fashion, and neither the tray 2 nor the stopping device 4 will experience much of an impact, hence damage to the tray 2 and stopping device 4 during stopping is reduced.

Opening parts are provided on two side faces of the tube part 411 respectively. Protruding parts adapted to the opening parts are provided on two side faces of the first core part 412 respectively. In some embodiments, as shown in Fig. 4, a wide opening part 4112 and a narrow opening part 4114 are provided on one side face of the tube part 411. A wide protruding part 4122 and a narrow protruding part 4124 are provided on one side face of the first core part 412. The wide opening part 4112 is adapted to the wide protruding part 4112, and the narrow opening part 4114 is adapted to the narrow protruding part 4124. For example, the wide opening part 4112 has the same width as the wide protruding part 4122, and the narrow opening part 4114 has the same width as the narrow protruding part 4124. Opening parts are arranged in the same way on another, opposite side face of the first core part 412, and protruding parts are arranged in the same way on another, opposite side face of the first core part 412.

As can be seen, the first core part 412 moves horizontally like a drawer in the shock absorbing cavity 411A. When the first core part 412 returns to the initial position (the first stopping position) from the second stopping position, the wide protruding part 4124 pushes against the narrow opening part 4114. That is to say, in the first stopping position, the wide protruding part 4124 is jammed at the junction of the wide opening part 4112 and narrow opening part 4114. Thus, with the structure of the first core part 412 according to the present invention, the first core part 412 can be prevented from flying out when returning to the initial position without any need for an additional component (e.g. an additional cap).

The second piston assembly 42 comprises a second core part 421, a screw 422 and a travel assistance member 423. The second core part 421 is coupled to the tube part 411 of the first piston assembly 41, in order to drive the first piston assembly 41 to move in the second movement direction (e.g. the vertical direction).

In some embodiments, the tube part 411 comprises a hollow rod part extending parallel to the second movement direction, the hollow rod part having a slot 4118. The second core part 421 has a connection part 4218 adapted to the slot 4118. For example, the slot 4118 is a cross-shaped slot, and the connection part 4218 is a cross-shaped connection part 4218 adapted to the cross-shaped slot 4118. The base 40 has a groove which accommodates the hollow rod part and in which the hollow rod part can move. The second core part 421 and the first piston assembly 41 are thereby attached to each other. The second core part 421 has a cavity 421A. The screw 422 extends into the cavity 421A, e.g. the screw 422 is thread-coupled to the second core part 421. The screw 422 is configured to fix the second core part 421.

The travel assistance member 423 is coupled to the second core part 421. When the first core part 412 needs to return into the movement path of the tray 2, the travel assistance member 421 applies a force to the second core part 421 such that the second piston assembly 42 pushes the first piston assembly 41 upward, so that the first piston assembly 41 goes back into the movement path of the tray 2. In some embodiments, the travel assistance member 421 is in the form of at least one spring element. The spring element is compressed when the second piston assembly 42 moves downward, and then uses its rebound force to cause the second piston assembly 42 to move upward, so as to push the first piston assembly 41 to move upward.

The second piston assembly 42 comprises a second cavity 42A. The base 40 is provided with a duct 411B, which is in fluid connection with both the shock absorbing cavity 411A and the second cavity 42A. In some embodiments, the duct 411B passes through the tube part 411 and the base 40. The stopping device 4 has a hole (not shown) for receiving a pressure medium; when the stopping device 4 needs to be supplied with the pressure medium, the pressure medium is first supplied to the cavity 42A of the second piston assembly 42 via the hole. A flow path of the pressure medium is described in detail below.

The first piston assembly 41 further comprises an adjustment member 413 passing through the duct 411B. For example, the adjustment member 413 is an adjustment screw. The adjustment member 413 moves up and down in the duct 411B, so as to narrow or widen the connection between the duct 411B and the shock absorbing cavity 411A, e.g. narrow or widen the cross-sectional area of the connection between the duct 411B and the shock absorbing cavity 411A, thereby changing the magnitude of damping of movement of the first core part 412 in the shock absorbing cavity 411A.

The first piston assembly 41 further comprises an annular sealing member 413 for sealing. The second piston assembly 42 further comprises an annular sealing member 424 for sealing. It should be understood that the sealing member 413 and sealing member 424 may take any suitable form adapted for sealing.

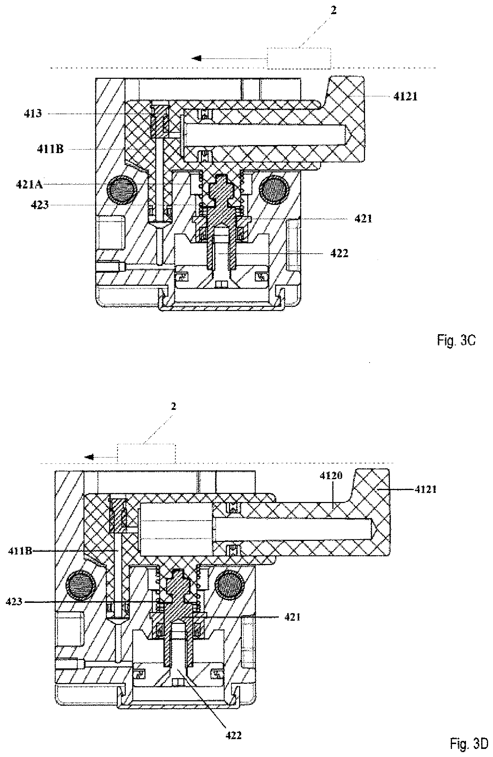

Figs. 3A - 3E show schematically the process of the tray 2 being stopped by the stopping device 4, wherein Fig. 3A shows an initial state, Fig. 3B shows a stop state, Fig. 3C shows a release start state, Fig. 3D shows a release end state, and Fig. 3E shows a return state. Each state is explained in sequence below in conjunction with the drawings.

### Initial state

As shown in Fig. 3A, the stopping part 4121 is at the first stopping position. At this time, a piston tube 411A has the maximum volume. The stopping part 4121 is located in the movement path of the tray 2, awaiting contact with the tray 2.

### Stop state

As shown in Fig. 3B, the stopping part 4121 comes into contact with the moving tray 2, and moves in the piston tube 411A in a damped fashion in such a direction as to gradually reduce the volume of the piston tube 411A, until the volume of the piston tube 411A is almost zero, i.e. stops moving at the second stopping position. At this time, the tray 2 is completely stopped, to allow the workpiece on the tray 2 to be subjected to various processing operations.

### Release start state

As shown in Fig. 3C, when the processing operation of the workpiece on the tray 2 has ended and the tray needs to be released, the pressure medium is supplied to the cavity 42A of the second piston assembly 42 via a hole (not shown) in the stopping device 4. In some embodiments, the hole is located above the second core part 421, and the pressure medium enters the cavity 42A in a downward direction from above via the hole. In some embodiments, a control signal to supply the pressure medium to the stopping device 4 comes from an external control valve, e.g. a solenoid valve. Once the cavity 42A of the second piston assembly 42 has been supplied with the pressure medium, the second piston assembly 42 moves downward. In the process of the second piston assembly 42 moving downward, a channel in communication with both the cavity 42A and the duct 411B is opened, so that the pressure medium enters the duct 411B via the duct, and thereby enters the piston tube 411A. Once the piston tube 411A has been supplied with the pressure medium, the first core part 412 moves in such a direction as to withdraw from the piston tube 411A, i.e. moves in the direction of the first stopping position.

### Release end state

As shown in Fig. 3D, the first core part 412 withdraws to a position that maximizes the volume of the piston tube 411A, i.e. the first stopped position. At this time, the first core part 412 is still below the movement path of the tray 2.

### Return state

As shown in Fig. 3E, for example under the control of a control signal of the control valve, the supply of the pressure medium to the first core part 412 is stopped. The second piston assembly 42 moves upward under the action of the rebound force of the spring 423, pushing the first piston assembly 41 to move upward, so that the first core part 412 goes back into the movement path of the tray 2. At this time, the stopping device 4 returns to the initial state, to await the next stopping.

The stopping device according to the present invention is structurally simple, low in cost, and easy to process. Thus, the conveying system having the stopping device according to the present invention has advantages such as high operating efficiency, low cost, and safe and accurate operation.

Although the present invention has been described here with reference to particular embodiments, the scope of the present invention is not limited to the details shown.

## Claims

1. A stopping device (4) for a conveying system (10), comprising:
a base (40);
a first piston assembly (41), fitted in the base (40), the first piston assembly (41) comprising:
a tube part (411), the tube part (411) comprising a shock absorbing cavity (411A), the shock absorbing cavity (411A) containing a pressure medium, the pressure medium being a gaseous pressure medium; and
a first core part (412) disposed in the tube part, the first core part (412) having a first movement direction relative to the base (40), and the first core part (412) comprising a stopping part (4121) and a rod part (4120) capable of reciprocating in the first movement direction in the shock absorbing cavity (411A), the stopping part (4121) being located at a free end of the rod part (4120), wherein the first piston assembly (41), relative to the base (40), has a second movement direction perpendicular to the first movement direction; and
a second piston assembly (42), which is fitted in the base (40) and coupled to the first piston assembly (41), wherein the second piston assembly (42) comprises a second cavity (42A) and is configured to move in the second movement direction so as to drive the first piston assembly (41) to move in the second movement direction, so that the first core part (412) has a lowered position in which it has moved out of a movement path of the tray (2) of the conveying system (10) by moving downward in the second movement direction, and an elevated position in which it has returned to the movement path of the tray (2) by moving upward in the second movement direction;
**characterized in that**
the base (40) is provided with a duct (411B), which is in fluid connection with both the shock absorbing cavity (411A) and the second cavity (42A); and
the first piston assembly (41) further comprises an adjustment member (413) passing through the duct (411B), the adjustment member (413) being configured to move in the duct (411B), so as to narrow or widen the connection between the duct (411B) and the shock absorbing cavity (411A), such that damping of movement of the first core part (412) in the shock absorbing cavity (411A) has different magnitudes.

2. The stopping device (4) for a conveying system (10) as claimed in claim 1, **characterized in that** the tube part (411) is a single-piece molded member, opening parts are provided on two opposite side faces of the tube part (411) respectively, and protruding parts adapted to the opening parts are provided on two opposite side faces of the first core part (412) respectively.

3. The stopping device (4) for a conveying system (10) as claimed in claim 2, **characterized in that**
the opening part on each side face of the tube part (411) comprises a wide opening part (4112) remote from the stopping part (4121) and a narrow opening part (4114) close to the stopping part (4121);
the protruding part on each side face of the first core part (412) comprises a wide protruding part (4122) remote from the stopping part (4121) and a narrow protruding part (4124) close to the stopping part (4121); and
the wide opening part (4112) is adapted to the wide protruding part (4122), and the narrow opening part (4114) is adapted to the narrow protruding part (4124).

4. The stopping device (4) for a conveying system (10) as claimed in claim 3, **characterized in that**
the first core part (412), in the first movement direction, has a first stopping position in which the first core part (412) is located in the shock absorbing cavity (411A) at a position of maximum extension, and a second stopping position reached by movement in a damped fashion in the shock absorbing cavity (411A) while staying in close contact with an inner wall of the tube part (411),the second stopping position being a position of maximum insertion of the first core part (412) in the shock absorbing cavity (411A); and
in the first stopping position, the wide protruding part (4122) of the first core part (412) pushes against the narrow opening part (4114) of the tube part (411).

5. The stopping device (4) for a conveying system (10) as claimed in any one of claims 1 - 4, **characterized in that** the second piston assembly (42) of the stopping device (4) comprises:
a second core part (421), coupled to the tube part (411) of the first piston assembly (41);
a screw (422), extending into a first cavity (421A) of the second core part (421) and being configured to fix the second core part (421), wherein the screw (422) is optionally thread-coupled to the second core part (421); and
a travel assistance member (423), coupled to the second core part (421), the travel assistance member (423) being configured to cause the first core part (412) to return to the elevated position located in the movement path of the tray (2) of the conveying system (10) by applying a force to the second core part (421) so that the second piston assembly (42) drives the first piston assembly (41) upward.

6. The stopping device (4) for a conveying system (10) as claimed in claim 5, **characterized in that**
the tube part (411) of the first piston assembly (41) further comprises a hollow rod part extending in the second movement direction from a bottom surface thereof, and the base (40) has a groove which accommodates the hollow rod part and in which the hollow rod part can move; and
the hollow rod part has a slot (4118), the second core part (421) having a connection part (4218) adapted to the slot (4118).

7. The stopping device (4) for a conveying system (10) as claimed in claim 6, **characterized in that** the slot (4118) of the hollow rod part and the connection part (4218) of the second core part (421) are complementary in shape.

8. The stopping device (4) for a conveying system (10) as claimed in any one of claims 5 - 7, **characterized in that** the travel assistance member (423) of the second piston assembly (42) comprises at least one spring element; and
the spring element is compressed when the second piston assembly moves downward and then, by means of a rebound force thereof, causes the second piston assembly to move upward so as to push the first piston assembly to move upward.

9. The stopping device (4) for a conveying system (10) as claimed in any one of claims 1 - 8, **characterized in that** the gaseous pressure medium is compression control.

10. The stopping device (4) for a conveying system (10) as claimed in any one of claims 1 - 9, **characterized in that** the first core part (412) is an L-shaped single-piece molded member.

11. The stopping device (4) for a conveying system (10) as claimed in claim 10, **characterized in that** the first core part is molded from plastic or aluminium.

12. The stopping device (4) for a conveying system (10) as claimed in any one of claims 1 - 11, **characterized in that** the rod part (4120) of the first core part (412) has a cavity in fluid communication with the shock absorbing cavity (411A) of the tube part (411).

13. A conveying system (10), comprising:
a conveying track (1);
a tray (2), adapted to the conveying track (1) and capable of moving along the conveying track (1), the tray (2) being adapted for loading a workpiece being subjected to an operation in the conveying system; and
a stopping device (4) as claimed in any one of claims 1 - 11, the stopping device being attached to the conveying track (1) and configured to stop the tray (2) in a damped fashion.

14. The conveying system (10) as claimed in claim 13, **characterized in that** the stopping device (4) has the following states in the process of stopping the tray:
an initial state, in which the stopping part of the stopping device is located in a movement path of the tray;
a stop state, in which the stopping part comes into contact with the tray, and moves in such a direction as to reduce a piston tube volume of the stopping device, until stopping is complete;
a release start state, in which the second piston assembly is caused to move downward by supplying the pressure medium to a cavity of the second piston assembly of the stopping device, such that the stopping part moves in such a direction as to increase the piston tube volume and is located below the movement path of the tray;
a release end state, in which the stopping part moves to a position that maximizes the piston tube volume; and
a return state, in which the supply of the pressure medium to the stopping device is stopped, such that the second piston assembly moves upward, so that the stopping part of the stopping device goes back into the movement path of the tray, to await the next stopping.

15. The conveying system as claimed in claim 14, **characterized in that** the conveying system (10) further comprises a control valve configured to control the times at which the pressure medium is supplied to the stopping device (4) and the supply of the pressure medium is stopped.

## Patentansprüche

1. Stoppvorrichtung (4) für ein Fördersystem (10), umfassend:
einen Sockel (40);
eine erste Kolbenanordnung (41), die in den Sockel (40) eingebaut ist, wobei die erste Kolbenanordnung (41) Folgendes umfasst:
ein Rohrteil (411), wobei das Rohrteil (411) einen stoßabsorbierenden Hohlraum (411A) umfasst, der stoßabsorbierende Hohlraum (411A) ein Druckmedium enthält und das Druckmedium ein gasförmiges Druckmedium ist; und
ein erstes Kernteil (412), das in dem Rohrteil angeordnet ist, wobei das erste Kernteil (412) eine erste Bewegungsrichtung relativ zum Sockel (40) aufweist und das erste Kernteil (412) ein Anschlagteil (4121) und ein Stangenteil (4120) umfasst, das in der Lage ist, sich in der ersten Bewegungsrichtung in dem stoßabsorbierenden Hohlraum (411A) hin und her zu bewegen, wobei das Anschlagteil (4121) an einem freien Ende des Stangenteils (4120) angeordnet ist, wobei die erste Kolbenanordnung (41) relativ zum Sockel (40) eine zweite Bewegungsrichtung rechtwinklig zur ersten Bewegungsrichtung aufweist; und
eine zweite Kolbenanordnung (42), die in den Sockel (40) eingebaut und mit der ersten Kolbenanordnung (41) gekoppelt ist, wobei die zweite Kolbenanordnung (42) einen zweiten Hohlraum (42A) umfasst und dazu ausgelegt ist, sich in der zweiten Bewegungsrichtung zu bewegen, um die erste Kolbenanordnung (41) anzutreiben, sich in der zweiten Bewegungsrichtung zu bewegen, sodass das erste Kernteil (412) eine abgesenkte Position, in der es sich durch Abwärtsbewegen in der zweiten Bewegungsrichtung aus einem Bewegungspfad der Schale (2) des Fördersystems (10) herausbewegt hat, und eine angehobene Position aufweist, in der es durch Aufwärtsbewegen in der zweiten Bewegungsrichtung in den Bewegungspfad der Schale (2) zurückgekehrt ist;
**dadurch gekennzeichnet, dass**
der Sockel (40) mit einem Kanal (411B) versehen ist, der sowohl mit dem stoßabsorbierenden Hohlraum (411A) als auch mit dem zweiten Hohlraum (42A) in Fluidverbindung steht; und
die erste Kolbenanordnung (41) ferner ein Einstellelement (413) umfasst, das durch den Kanal (411B) hindurchgeht, wobei das Einstellelement (413) dazu ausgelegt ist, sich in dem Kanal (411B) zu bewegen, um die Verbindung zwischen dem Kanal (411B) und dem stoßabsorbierenden Hohlraum (411A) so zu verengen oder zu erweitern, dass die Dämpfung der Bewegung des ersten Kernteils (412) in dem stoßabsorbierenden Hohlraum (411A) unterschiedlich groß ist.

2. Stoppvorrichtung (4) für ein Fördersystem (10) gemäß Anspruch 1, **dadurch gekennzeichnet, dass** das Rohrteil (411) ein einteiliges Formteil ist, dass an zwei gegenüberliegenden Seitenflächen des Rohrteils (411) jeweils Öffnungsteile vorgesehen sind und dass an die Öffnungsteile angepasste vorstehende Teile jeweils an zwei gegenüberliegenden Seitenflächen des ersten Kernteils (412) vorgesehen sind.

3. Stoppvorrichtung (4) für ein Fördersystem (10) gemäß Anspruch 2, **dadurch gekennzeichnet, dass**
das Öffnungsteil auf jeder Seitenfläche des Rohrteils (411) einen breiten Öffnungsteil (4112), der vom Stoppteil (4121) entfernt ist, und einen schmalen Öffnungsteil (4114) in der Nähe des Stoppteils (4121) umfasst;
der vorspringende Teil auf jeder Seitenfläche des ersten Kernteils (412) einen breiten vorspringenden Teil (4122), der vom Stoppteil (4121) entfernt ist, und einen schmalen vorspringenden Teil (4124) nahe dem Stoppteil (4121) umfasst; und
der breite Öffnungsteil (4112) an den breiten vorspringenden Teil (4122) und der schmale Öffnungsteil (4114) an den schmalen vorspringenden Teil (4124) angepasst ist.

4. Stoppvorrichtung (4) für ein Fördersystem (10) gemäß Anspruch 3, **dadurch gekennzeichnet, dass**
das erste Kernteil (412) in der ersten Bewegungsrichtung eine erste Stoppposition, in der sich das erste Kernteil (412) in dem stoßabsorbierenden Hohlraum (411A) in einer Position maximaler Auslenkung befindet, und eine zweite Stoppposition aufweist, die durch eine gedämpfte Bewegung in dem stoßabsorbierenden Hohlraum (411A) erreicht wird, während sie in engem Kontakt mit einer Innenwand des Rohrteils (411) bleibt, wobei die zweite Stoppposition eine Position des maximalen Einführens des ersten Kernteils (412) in den stoßabsorbierenden Hohlraum (411A) ist; und
in der ersten Stoppposition der breite vorstehende Teil (4122) des ersten Kernteils (412) gegen den schmalen Öffnungsteil (4114) des Rohrteils (411) drückt.

5. Stoppvorrichtung (4) für ein Fördersystem (10) gemäß einem der Ansprüche 1 bis 4, **dadurch gekennzeichnet, dass** die zweite Kolbenanordnung (42) der Stoppvorrichtung (4) Folgendes umfasst:
ein zweites Kernteil (421), das mit dem Rohrteil (411) der ersten Kolbenanordnung (41) gekoppelt ist;
eine Schraube (422), die sich in einen ersten Hohlraum (421A) des zweiten Kernteils (421) erstreckt und dazu ausgelegt ist, das zweite Kernteil (421) zu fixieren, wobei die Schraube (422) optional mit dem zweiten Kernteil (421) gewindegekoppelt ist; und
ein Bewegungsunterstützungselement (423), das mit dem zweiten Kernteil (421) gekoppelt ist, wobei das Bewegungsunterstützungselement (423) dazu ausgelegt ist, das erste Kernteil (412) zu veranlassen, in die angehobene Position zurückzukehren, die sich in dem Bewegungspfad der Schale (2) des Fördersystems (10) befindet, indem es eine Kraft auf das zweite Kernteil (421) ausübt, sodass die zweite Kolbenanordnung (42) die erste Kolbenanordnung (41) nach oben treibt.

6. Stoppvorrichtung (4) für ein Fördersystem (10) gemäß Anspruch 5, **dadurch gekennzeichnet, dass**
das Rohrteil (411) der ersten Kolbenanordnung (41) ferner ein hohles Stangenteil umfasst, das sich in der zweiten Bewegungsrichtung von einer Bodenfläche desselben erstreckt, und der Sockel (40) eine Nut aufweist, die das hohle Stangenteil aufnimmt und in der sich das hohle Stangenteil bewegen kann; und
das hohle Stangenteil einen Schlitz (4118) aufweist, wobei das zweite Kernteil (421) ein an den Schlitz (4118) angepasstes Verbindungsteil (4218) aufweist.

7. Stoppvorrichtung (4) für ein Fördersystem (10) gemäß Anspruch 6, **dadurch gekennzeichnet, dass** der Schlitz (4118) des Hohlstangenteils und das Verbindungsteil (4218) des zweiten Kernteils (421) komplementär geformt sind.

8. Stoppvorrichtung (4) für ein Fördersystem (10) gemäß einem der Ansprüche 5-7, **dadurch gekennzeichnet, dass** das Bewegungsunterstützungselement (423) der zweiten Kolbenanordnung (42) mindestens ein Federelement umfasst; und
das Federelement zusammengedrückt wird, wenn sich die zweite Kolbenanordnung nach unten bewegt, und dann durch seine Rückprallkraft die zweite Kolbenanordnung veranlasst, sich nach oben zu bewegen, um die erste Kolbenanordnung nach oben zu drücken.

9. Stoppvorrichtung (4) für ein Fördersystem (10) gemäß einem der Ansprüche 1-8, **dadurch gekennzeichnet, dass** das gasförmige Druckmedium kompressionsgesteuert ist.

10. Stoppvorrichtung (4) für ein Fördersystem (10) gemäß einem der Ansprüche 1-9, **dadurch gekennzeichnet, dass** das erste Kernteil (412) ein L-förmiges, einteiliges Formteil ist.

11. Stoppvorrichtung (4) für ein Fördersystem (10) gemäß Anspruch 10, **dadurch gekennzeichnet, dass** das erste Kernteil aus Kunststoff oder Aluminium geformt ist.

12. Stoppvorrichtung (4) für ein Fördersystem (10) gemäß einem der Ansprüche 1-11, **dadurch gekennzeichnet, dass** das Stangenteil (4120) des ersten Kernteils (412) einen Hohlraum aufweist, der in Fluidverbindung mit dem stoßabsorbierenden Hohlraum (411A) des Rohrteils (411) steht.

13. Fördersystem (10), umfassend:
eine Förderbahn (1);
eine Schale (2), die an die Förderbahn (1) angepasst und in der Lage ist, sich entlang der Förderbahn (1) zu bewegen, wobei die Schale (2) dazu angepasst ist, ein Werkstück aufzunehmen, das einem Vorgang in dem Fördersystem unterzogen wird; und
eine Stoppvorrichtung (4) gemäß einem der Ansprüche 1-11, wobei die Fördervorrichtung an der Förderbahn (1) angebracht und dazu ausgelegt ist, die Schale (2) gedämpft anzuhalten.

14. Fördersystem (10) gemäß Anspruch 13, **dadurch gekennzeichnet, dass** die Stoppvorrichtung (4) beim Stoppen der Schale die folgenden Zustände aufweist:
einen Anfangszustand, in dem sich das Stoppteil der Stoppvorrichtung in einem Bewegungspfad der Schale befindet;
einen Stoppzustand, in dem das Stoppteil mit der Schale in Berührung kommt und sich in einer Richtung bewegt, in der das Volumen des Kolbenrohrs der Stoppvorrichtung verringert wird, bis der Stoppvorgang abgeschlossen ist;
einen Freigabestartzustand, in dem die zweite Kolbenanordnung dazu veranlasst wird, sich nach unten zu bewegen, indem das Druckmedium einem Hohlraum der zweiten Kolbenanordnung der Stoppvorrichtung zugeführt wird, sodass sich das Stoppteil in einer Richtung bewegt, in der das Volumen des Kolbenrohrs vergrößert wird, und sich unterhalb des Bewegungspfads der Schale befindet;
einen Freigabeendzustand, in dem sich das Stoppteil in eine Position bewegt, die das Volumen des Kolbenrohrs maximiert; und
einen Rückkehrzustand, in dem die Zufuhr des Druckmediums zur Stoppvorrichtung gestoppt wird, sodass sich die zweite Kolbenanordnung nach oben bewegt, sodass das Stoppteil der Stoppvorrichtung in den Bewegungspfad der Schale zurückkehrt, um den nächsten Stopp zu erwarten.

15. Fördersystem gemäß Anspruch 14, **dadurch gekennzeichnet, dass** das Fördersystem (10) ferner ein Steuerventil umfasst, das dazu ausgelegt ist, die Zeiten zu steuern, zu denen das Druckmedium der Stoppvorrichtung (4) zugeführt wird und die Zufuhr des Druckmediums gestoppt wird.

## Revendications

1. Dispositif d'arrêt (4) pour un système de transport (10), comprenant :
une base (40) ;
un premier ensemble piston (41), monté dans la base (40), le premier ensemble piston (41) comprenant :
une partie tubulaire (411), la partie tubulaire (411) comprenant une cavité d'absorption des chocs (411A), la cavité d'absorption des chocs (411A) contenant un milieu de pression, le milieu de pression étant un milieu de pression gazeux ; et
une première partie de noyau (412) disposée dans la partie tubulaire, la première partie de noyau (412) ayant une première direction de mouvement par rapport à la base (40), et la première partie de noyau (412) comprenant une partie d'arrêt (4121) et une partie tige (4120) capable de se déplacer en va et vient dans la première direction de mouvement dans la cavité d'absorption des chocs (411A), la partie d'arrêt (4121) étant située à une extrémité libre de la partie tige (4120), le premier ensemble piston (41), par rapport à la base (40), ayant une seconde direction de mouvement perpendiculaire à la première direction de mouvement ; et
un second ensemble piston (42), qui est monté dans la base (40) et couplé au premier ensemble piston (41), le second ensemble piston (42) comprenant une seconde cavité (42A) et étant configuré pour se déplacer dans la seconde direction de mouvement de manière à entraîner le premier ensemble piston (41) à se déplacer dans la seconde direction de mouvement, de sorte que la première partie de noyau (412) a une position abaissée dans laquelle elle est sortie d'une trajectoire de déplacement du plateau (2) du système de transport (10) en se déplaçant vers le bas dans la seconde direction de déplacement, et une position élevée dans laquelle elle est revenue dans la trajectoire de déplacement du plateau (2) en se déplaçant vers le haut dans la seconde direction de déplacement ;
**caractérisé en ce que**
la base (40) est pourvue d'un conduit (411B), qui est en connexion fluide avec la cavité d'absorption des chocs (411A) et la seconde cavité (42A) ; et
le premier ensemble piston (41) comprend en outre un élément de réglage (413) traversant le conduit (411B), l'élément de réglage (413) étant configuré pour se déplacer dans le conduit (411B), de manière à rétrécir ou à élargir la connexion entre le conduit (411B) et la cavité d'absorption des chocs (411A), de sorte que l'amortissement du mouvement de la première partie de noyau (412) dans la cavité d'absorption des chocs (411A) a des amplitudes différentes.

2. Dispositif d'arrêt (4) pour un système de transport (10) selon la revendication 1, **caractérisé en ce que** la partie tubulaire (411) est un élément moulé d'une seule pièce, des parties d'ouverture sont prévues sur deux faces latérales opposées de la partie tubulaire (411) respectivement, et des parties saillantes adaptées aux parties d'ouverture sont prévues sur deux faces latérales opposées de la première partie de noyau (412) respectivement.

3. Dispositif d'arrêt (4) pour un système de transport (10) selon la revendication 2, **caractérisé en ce que**
la partie d'ouverture sur chaque face latérale de la partie tubulaire (411) comprend une partie d'ouverture large (4112) éloignée de la partie d'arrêt (4121) et une partie d'ouverture étroite (4114) proche de la partie d'arrêt (4121) ;
la partie saillante sur chaque face latérale de la première partie de noyau (412) comprend une partie saillante large (4122) éloignée de la partie d'arrêt (4121) et une partie saillante étroite (4124) proche de la partie d'arrêt (4121) ; et
la partie d'ouverture large (4112) est adaptée à la partie saillante large (4122), et la partie d'ouverture étroite (4114) est adaptée à la partie saillante étroite (4124).

4. Dispositif d'arrêt (4) pour un système de transport (10) selon la revendication 3, **caractérisé en ce que**
la première partie de noyau (412), dans la première direction de mouvement, a une première position d'arrêt à laquelle la première partie de noyau (412) est située dans la cavité d'absorption des chocs (411A) à une position d'extension maximale, et une seconde position d'arrêt atteinte par un mouvement de manière amortie dans la cavité d'absorption des chocs (411A) tout en restant en contact étroit avec une paroi intérieure de la partie tubulaire (411), la seconde position d'arrêt étant une position d'insertion maximale de la première partie de noyau (412) dans la cavité d'absorption des chocs (411A) ; et
dans la première position d'arrêt, la partie saillante large (4122) de la première partie de noyau (412) pousse contre la partie d'ouverture étroite (4114) de la partie tubulaire (411).

5. Dispositif d'arrêt (4) pour un système de transport (10) selon l'une des revendications 1 à 4, **caractérisé en ce que** le second ensemble piston (42) du dispositif d'arrêt (4) comprend :
une seconde partie de noyau (421), couplée à la partie tubulaire (411) du premier ensemble piston (41) ;
une vis (422), s'étendant dans une première cavité (421A) de la seconde partie de noyau (421) et configurée pour fixer la seconde partie de noyau (421), la vis (422) étant éventuellement accouplée par filetage à la seconde partie de noyau (421) ; et
un élément d'assistance au déplacement (423), couplé à la seconde partie de noyau (421), l'élément d'assistance au déplacement (423) étant configuré pour amener la première partie de noyau (412) à revenir à la position élevée située dans la trajectoire de déplacement du plateau (2) du système de transport (10) en appliquant une force à la seconde partie de noyau (421) de sorte que le second ensemble piston (42) entraîne le premier ensemble piston (41) vers le haut.

6. Dispositif d'arrêt (4) pour un système de transport (10) selon la revendication 5, **caractérisé en ce que**
la partie tubulaire (411) du premier ensemble piston (41) comprend en outre une partie tige creuse s'étendant dans la seconde direction de mouvement à partir d'une surface inférieure, et la base (40) a une rainure qui accueille la partie tige creuse et dans laquelle la partie tige creuse peut se déplacer ; et
la partie tige creuse comporte une fente (4118), la seconde partie de noyau (421) comportant une partie de connexion (4218) adaptée à la fente (4118).

7. Dispositif d'arrêt (4) pour un système de transport (10) selon la revendication 6, **caractérisé en ce que** la fente (4118) de la partie tige creuse et la partie de connexion (4218) de la seconde partie de noyau (421) sont de forme complémentaire.

8. Dispositif d'arrêt (4) pour un système de transport (10) selon l'une quelconque des revendications 5 à 7, **caractérisé en ce que** l'élément d'assistance au déplacement (423) du second ensemble piston (42) comprend au moins un élément de ressort, et
l'élément de ressort est comprimé lorsque le second ensemble piston se déplace vers le bas puis, au moyen d'une force de rebond, amène le second ensemble piston à se déplacer vers le haut de manière à pousser le premier ensemble piston à se déplacer vers le haut.

9. Dispositif d'arrêt (4) pour un système de transport (10) selon l'une quelconque des revendications 1 à 8, **caractérisé en ce que** le milieu de pression gazeux est une commande de compression.

10. Dispositif d'arrêt (4) pour un système de transport (10) selon l'une quelconque des revendications 1 à 9, **caractérisé en ce que** la première partie de noyau (412) est un élément moulé d'une seule pièce en forme de L.

11. Dispositif d'arrêt (4) pour un système de transport (10) selon la revendication 10, **caractérisé en ce que** la première partie de noyau est moulée en plastique ou en aluminium.

12. Dispositif d'arrêt (4) pour un système de transport (10) selon l'une quelconque des revendications 1 à 11, **caractérisé en ce que** la partie tige (4120) de la première partie de noyau (412) a une cavité en communication fluide avec la cavité d'absorption des chocs (411A) de la partie tubulaire (411).

13. Système de transport (10) comprenant :
une voie de transport (1) ;
un plateau (2), adapté à la voie de transport (1) et capable de se déplacer le long de la voie de transport (1), le plateau (2) étant adapté au chargement d'une pièce à usiner soumise à une opération dans le système de transport ; et
un dispositif d'arrêt (4) selon l'une quelconque des revendications 1 à 11, le dispositif d'arrêt étant fixé à la voie de transport (1) et configuré pour arrêter le plateau (2) de manière amortie.

14. Système de transport (10) selon la revendication 13, **caractérisé en ce que** le dispositif d'arrêt (4) a les états suivants dans le processus d'arrêt du plateau :
un état initial, dans lequel la partie d'arrêt du dispositif d'arrêt est située dans une trajectoire de déplacement du plateau ;
un état d'arrêt, dans lequel la partie d'arrêt entre en contact avec le plateau et se déplace dans une direction telle qu'elle réduit le volume du tube du piston du dispositif d'arrêt, jusqu'à ce que l'arrêt soit terminé ;
un état de début de libération, dans lequel le second ensemble piston est amené à se déplacer vers le bas en fournissant le milieu de pression à une cavité du second ensemble piston du dispositif d'arrêt, de sorte que la partie d'arrêt se déplace dans une direction telle qu'elle augmente le volume du tube du piston et se trouve en dessous de la trajectoire de déplacement du plateau ;
un état final de libération, dans lequel la pièce d'arrêt se déplace jusqu'à une position qui maximise le volume du tube du piston ; et
un état de retour, dans lequel l'alimentation en milieu de pression du dispositif d'arrêt est interrompue, de sorte que le second ensemble piston se déplace vers le haut, de sorte que la partie d'arrêt du dispositif d'arrêt retourne dans la trajectoire de déplacement du plateau, en attendant l'arrêt suivant.

15. Système de transport selon la revendication 14, **caractérisé en ce que** le système de transport (10) comprend en outre une vanne de commande configurée pour commander les moments où le milieu de pression est fourni au dispositif d'arrêt (4) et où la fourniture du milieu de pression est arrêtée.
